# DEMANDE DE BREVET EUROPEEN

(11) **EP 0 747 396 A1**
(43) Date de publication de la demande: **11.12.1996**
(21) Numéro de dépôt: 96401213.2
(22) Date de dépôt: 06.06.1996
(51) Int. Cl.: C08B 30/04, A23L 1/10, A23J 1/14, A23L 1/025

(54) **Procédé et installation de séparation des constituants de farines de céréales ou de tubercules, ou de produits dérivés**

(30) Priorité: 09.06.1995 FR 9507035
(71) Demandeur: INSTITUT NATIONAL DE LA RECHERCHE AGRONOMIQUE, F-75341 Paris Cédex 07 (FR); CENTRE TECHNIQUE DES UTILISATEURS DE CEREALES DE LA BISCUITERIE- BISCOTTERIE, 91305 Massy Cédex (FR); UNDATIM ULTRASONICS S.A., B-1348 LOUVAIN-LA-NEUVE (BE)
(72) Inventeur: Godon, Bernard, 44000 Nantes (FR); Callard, Muriel, 91800 Brunoy (FR)
(74) Mandataire: Phélip, Bruno

(57) **Abrégé**

Le procédé de séparation des constituants de farines de céréales ou de tubercules, ou de produits dérivés consiste :
- à réaliser une suspension de la farine ou du produit dérivé, ceci à une concentration compatible avec une propagation des ondes ultra-sonores,
- à soumettre la suspension obtenue à un traitement par ultrasons de puissance, puis
- à soumettre la suspension traitée à un procédé physique séparatif adapté aux constituants que l'on désire séparer.

Application, notamment, à la séparation de l'amidon du gluten de blé à partir d'une suspension de farine de blé.

## Description

La présente invention concerne un procédé de séparation des constituants de farines de céréales ou de tubercules, ou de produits dérivés de ces farines ; elle concerne également une installation pour la mise en oeuvre de ce procédé.

L'invention concerne en particulier le domaine des industries de craquage (amidonnerie, féculerie ...) et elle vise plus spécialement à séparer l'amidon des autres constituants de la matière de base.

D'une manière générale, le grain de blé contient de l'amidon dans une proportion voisine de 75 % en poids. Dans le domaine de l'amidonnerie, le but recherché est d'isoler la plus grande quantité possible de cet amidon, et ce, dans un état de pureté optimum. Dans tous les cas, on obtient :
- une fraction d'amidon A qui est bien valorisable,
- une fraction riche en protéines, et
- une fraction d'amidon B constituée d'un mélange d'amidon, de protéines et de pentosanes, qui est peu valorisable.

Différentes méthodes ont été utilisées pour séparer l'amidon du gluten de blé, à partir de la farine obtenue par mouture sèche du grain.

Parmi celles-ci, le procédé "MARTIN" (Didry P., Munier M., Pujol G. 1 979 - Renaissance de la glutennerie - Industries Alimentaires Agricoles 96, 553-555) consiste à former une pâte eau/farine dans des proportions 60/100 similaires à celles d'une pâte à pain, puis à la laver lentement avec de l'eau.
Sous une action mécanique faible, le gluten se forme et l'amidon est entraîné par l'eau de lixiviation.
Ce procédé permet d'obtenir des rendements élevés et des produits (gluten et amidon) de bonne qualité. Il présente cependant l'inconvénient de mettre en oeuvre de grandes quantités d'eau et de nécessiter l'emploi de farines de bonne qualité boulangère.

On connaît également le procédé "BATTER" (Knight J.W. 1985 - Wheat starch and gluten - London - Crampion Press) basé sur la propriété de floculation du gluten dans une dispersion de farine dans l'eau. Il consiste à former une "bouillie" chaude (farine/eau : 100/125), et à la travailler dans un excès d'eau. Il se forme des agglomérats de gluten et la séparation est assurée par des étapes successives de tamisage.
Ce procédé exige lui aussi beaucoup d'eau et les rendements sont assez faibles.

Il existe encore le procédé "FESCA" (Hunwick R.J. 1980 - The separation of carbohydrates and proteins from wheat for the production of energy and food : conventional and proposed processes - Food Technology in Australia 32, 9, 458-466) qui s'inspire de la méthode "BATTER" ci-dessus, mais qui utilise de l'eau plutôt tiède et qui effectue la séparation des produits par centrifugation.
Ce procédé présente l'inconvénient de ne pas permettre l'obtention d'un gluten commercial riche en protéines.

Le procédé "RAISIO/ALPHA LAVAL" (Verberne P., Zwitserloot W. 1978 - A new hydrocyclone process for the separation of starch and gluten from wheat flour - Starch 30, 10, 337-338) a été développé pour limiter au maximum les quantités d'eau nécessaires.
Il consiste à réaliser une "bouillie" tiède à laquelle on fait subir un traitement mécanique intense. L'amidon est ensuite séparé d'une fraction riche en protéines par une opération de centrifugation.
Des méthodes voisines utilisent un principe de séparation par hydrocyclone plutôt que par centrifugeuse.
D'une manière générale ces procédés présentent toujours l'inconvénient d'être sensibles à la qualité de la farine utilisée et d'avoir des rendements insatisfaisants.

Dans le procédé "WESTFALIA SEPARATOR" (Zwitserloot W.R.M. 1989 - Production of wheat starch and gluten : historical review and development into a new approach in wheat is unique - Editeur Y.Pomeranz - AACC St-Paul USA) on fait subir au mélange farine/eau une homogénéisation sous haute pression (supérieure à 100 bars).
Ce procédé permet d'obtenir un bon rendement en amidon; il permet également de rendre la séparation plus indépendante de la qualité initiale de la farine.

Comme on l'a exposé ci-avant, la séparation des différents constituants de la farine de blé est réalisée par des techniques et des technologies très diverses. Dans tous les cas, ces procédés prévoient une étape de préparation de la mouture de base destinée à faciliter et optimiser l'opération ultérieure de séparation. Cette étape de préparation peut mettre en oeuvre des moyens mécaniques, type malaxage par exemple ; on peut aussi utiliser la chaleur ou bien une combinaison de moyens thermiques et mécaniques. Cependant, pour obtenir une séparation efficace, il est nécessaire d'effectuer une étape de préparation préalable assez poussée et cela entraîne une dégradation ou un endommagement parfois important des constituants. Dans la pratique, on est tenu de rechercher un compromis entre le rendement et la qualité de séparation.

La présente invention propose de perfectionner les procédés séparatifs des constituants de farines de céréales (blé, orge, mais ...) ou de tubercules (pommes de terre, manioc ...) en vue, soit d'obtenir les rendements actuels avec une meilleure qualité, c'est-à-dire une dégradation moindre des constituants ou une meilleure pureté, soit d'améliorer le rendement et l'efficacité de la séparation tout en conservant une qualité similaire.

Conformément à l'invention, ce procédé de séparation consiste à soumettre une suspension de la matière de base à un traitement par des ultrasons de puissance, avant de la soumettre à un procédé physique séparatif adapté au(x) constituant(s) que l'on désire séparer.
De façon surprenante, les ultrasons de puissance modifient les relations entre les constituants au sein même de la suspension de base, et un tel traitement optimise les performances du procédé physique séparatif ultérieur. On obtient une bonne séparation sans constater de dégradation des constituants.

La suspension de la farine ou du produit dérivé de départ est réalisée à une concentration compatible avec une propagation des ondes ultra-sonores. Cette suspension peut être réalisée dans l'eau ; en fonction du type de traitement mis en oeuvre, les proportions farine/eau sont avantageusement de l'ordre de 1/1 à 1/5 en poids et de préférence voisines de 1/3.

Les ultrasons de puissance sont appliqués sur la suspension par tout moyen approprié connu de l'homme de l'art.
A titre indicatif, on peut prévoir un traitement discontinu en bain ou en cuve ("batch"), avec une ou plusieurs sonde(s) plongeante(s).
On peut également envisager un traitement en continu, dans une cellule en continu, par déplacement de la suspension entre les plaques d'un générateur ou à l'intérieur d'un générateur en tube type rond, pentagonal ou hexagonal ... Les cellules en continu du type "à plaques" pourront être préférées du fait de l'homogénéité du champ acoustique créé.

En matière de générateur d'ultrasons, on peut par exemple choisir parmi les céramiques piezo-électriques ou les transducteurs magnétostrictifs.

A noter que par rapport à une technique en "batch", l'utilisation d'une cellule en continu permet le traitement de suspensions plus concentrées (se rapprochant de proportions farine/eau de l'ordre de 1/1).

La fréquence des ultrasons de puissance utilisés est comprise entre 16 et 100 kHz ; pour conserver un rendement énergétique favorable tout en restant dans la zone des fréquences inaudibles on utilise de préférence une fréquence voisine de 20 kHz.

Les temps de traitement sont de l'ordre de quelques secondes pour chaque fraction de la suspension (5 à 20 secondes par exemple).
Dans le cadre d'un traitement en continu, le débit de la suspension est adapté en conséquence. Pour les traitements discontinus en cuve, le temps d'application est fonction de la nature du produit traité, de l'homogénéisation, de la taille et de la forme de la cuve, ou encore du type d'émetteur d'ultrasons.

L'étape ultérieure de séparation des constituants est conduite par tout moyen conventionnel utilisé dans le domaine technique concerné, genre centrifugeuse, hydrocyclone, combinaison de ces deux moyens ou autre...

L'application principale de ce procédé se situe dans le domaine de l'amidonnerie, pour la séparation de l'amidon des autres constituants, les protéines en particulier, c'est pourquoi les matières de base particulièrement préconisées sont les céréales type blé, orge, mais ... ou les tubercules riches en amidon telles la pomme de terre ou le manioc. Bien entendu, on peut tout-à-fait envisager son utilisation pour la séparation d'autres constituants de ces matières de base ; les procédés séparatifs utilisés seront fonction du ou des constituants que l'on désire isoler.

L'invention peut également trouver des applications intéressantes dans les opérations de préparation au niveau du laboratoire.

### Exemples comparatifs

1- On prépare 1 kilo de suspension farine de blé/eau dans une proportion de 1/3 en poids, cette suspension est directement soumise à une centrifugation (3000 g pendant 10 minutes).
   Résultats
   On n'obtient pas deux phases distinctes ; ce traitement ne permet pas de séparer l'amidon des protéines.
2- On prépare 1 kilo de suspension farine de blé/eau dans une proportion de 1/3 en poids. On applique ensuite un traitement mécanique intense type mixeur (15000t/mn pendant 2 mn), avant l'opération de centrifugation (3000 g pendant 10 minutes).
   Résultats
   On n'obtient pas deux phases distinctes ; ce traitement ne permet pas de séparer l'amidon des protéines.
3- On prépare 1 kilo de suspension farine de blé/eau dans une proportion de 2/3 en poids. Cette suspension est soumise à une centrifugation (3000 g pendant 10 minutes).
   Résultats
   On obtient des phases très faiblement distinctes que l'on ne peut pas séparer pour analyse.
4- On prépare 1 kilo de suspension farine de blé/eau dans une proportion de 9/10 en poids. Cette suspension est soumise à une centrifugation (3000 g pendant 10 minutes).
   Résultats
   On obtient une séparation de deux phases insolubles dans l'eau.
   Le poids sec de la fraction riche en amidon représente 54,5 % du poids sec de la farine de départ. La teneur en protéines dans cette fraction d'amidon est de 1,5 % (dosage par la méthode de Kjeldahl).
5- On prépare 1 kilo de suspension farine de blé/eau dans une proportion de 9/10 en poids. Cette suspension est soumise à un traitement mécanique intense (mixeur 15000t/mn pendant 2 mn), puis elle est soumise à la centrifugation (3000 g pendant 10 minutes).
   Résultats
   On obtient une séparation de deux phases insolubles dans l'eau.
   Le poids sec de la fraction riche en amidon représente 43,4 % du poids sec de la farine de départ. La teneur en protéines dans cette fraction d'amidon est de 0,9 % (dosage par la méthode de Kjeldahl).
6- On prépare 1 kilo de suspension farine de blé/eau dans une proportion de 1/3 en poids. Cette suspension est placée sous agitation magnétique dans une cuve cylindrique à fond plat de 20 cm de diamètre. Dans cette cuve, on installe une sonde plongeante de 2 cm de diamètre adaptée pour générer des ultrasons de puissance à une fréquence de l'ordre de 20 kHz. La puissance appliquée est voisine de 70 watt, soit environ 25 watt/cm² ; ce traitement est appliqué pendant 15 minutes. La suspension est ensuite soumise à une centrifugation (3000 g pendant 10 minutes).
   Résultats
   On obtient une séparation de deux phases insolubles dans l'eau : une phase inférieure constituée essentiellement d'amidon, et une phase riche en protéines et en parois cellulaires (sons et pentosanes). Le poids sec de la fraction riche en amidon représente 52,4 % du poids sec de la farine de départ. La teneur en protéines dans cette fraction d'amidon est de 0,8 % (dosage par la méthode de Kjeldahl).

### Discussion

Les essais 1, 2 et 3 montrent qu'un traitement classique par simple centrifugation ne permet pas d'obtenir une séparation de l'amidon des protéines à des concentrations faibles en farine (essais 1 et 3), même en présence d'un traitement mécanique intense (essai 2).

Lorsque l'on augmente la concentration (jusque vers 1/1-farine/eau), il est possible d'obtenir une séparation avec ou sans traitement mécanique préalable (essais 4 et 5). Cependant, ou bien la phase qui est convenablement enrichie en amidon contient beaucoup de protéines (essai 4), ou bien on obtient un amidon plus pur mais en quantité plus faible (essai 5).

L'essai 6 montre que le traitement préalable par ultrasons de puissance permet l'obtention d'un amidon relativement pur et en quantité satisfaisante, même à des concentrations faibles en farine.

Ce qui précède montre que l'invention peut permettre la mise au point de procédés séparatifs originaux plus simples dans la mise en oeuvre et les moyens utilisés que ceux connus jusqu'à maintenant. On peut également envisager d'appliquer les ultrasons de puissance aux techniques connues et actuellement utilisées, en remplacement ou en complément de l'étape de préparation de la matière, en vue d'optimiser lesdites techniques en rendement et/ou qualité. Les ultrasons peuvent être appliqués directement sur la suspension de départ ou sur un produit dérivé comme la fraction d'amidon B par exemple.

Le procédé selon l'invention permet d'améliorer le rendement en amidon tout en évitant l'altération des constituants de la matière de base.

Ce traitement, peu coûteux, est indépendant de la qualité de la farine de base et il présente l'avantage de pouvoir s'intégrer efficacement dans les procédés existants, sans nécessiter de modifications structurelles importantes.

## Revendications

1. Procédé de séparation des constituants de farines de céréales ou de tubercules, ou de produits dérivés de ces farines, lequel procédé consiste :
- à réaliser une suspension de la farine ou du produit dérivé, ceci à une concentration compatible avec une propagation des ondes ultra-sonores,
- à soumettre la suspension obtenue à un traitement par ultrasons de puissance, puis
- à soumettre la suspension traitée à un procédé physique séparatif adapté aux constituants que l'on désire séparer.

2. Procédé selon la revendication 1, caractérisé en ce qu'il consiste à appliquer à la suspension des ultrasons de puissance dont la fréquence est comprise entre 16 et 100 kHz.

3. Procédé selon la revendication 2, caractérisé en ce qu'il consiste à appliquer à la suspension des ultrasons de puissance dont la fréquence est de l'ordre de 20 kHz.

4. Procédé selon l'une quelconque des revendications 1 à 3, caractérisé en ce que le traitement de la suspension par les ultrasons de puissance est réalisé en système continu par déplacement de ladite suspension entre les plaques d'un générateur de type céramique piézo-électrique.

5. Procédé selon l'une quelconque des revendications 1 à 4, caractérisé en ce que la suspension de la farine ou du produit dérivé est réalisée dans l'eau.

6. procédé selon la revendication 5, caractérisé en ce que la suspension de farine dans l'eau est réalisée dans des proportions farine/eau de l'ordre de 1/1 à 1/5 en poids.

7. Installation pour la mise en oeuvre du procédé de séparation selon l'une quelconque des revendications 1 à 6, caractérisée en ce qu'elle comporte une unité de traitement par les ultrasons de puissance de la suspension de farine ou de produits dérivés, laquelle unité est disposée en amont d'un dispositif séparatif physique.

8. Application du procédé selon l'une quelconque des revendications 1 à 6, pour la séparation de l'amidon et du gluten de blé.
